# EUROPÄISCHE PATENTSCHRIFT

(11) **EP 0 691 534 B1**
(45) Veröffentlichungstag und Bekanntmachung des Hinweises auf die Patenterteilung: **12.12.2001**
(21) Anmeldenummer: 95108569.5
(22) Anmeldetag: 03.06.1995
(51) Int. Cl.: G01N 21/53

(54) **Verfahren zur Ermittlung der Sichtweite, insbesondere für die Bewegung eines Kraftfahrzeuges**
Method of visibility determination in particular for vehicle movement
Procédé de détermination de la visibilité, en particulier pour le déplacement d'un véhicule

(30) Priorität: 06.07.1994 DE 4423604
(43) Veröffentlichungstag der Anmeldung: 10.01.1996
(73) Patentinhaber: Volkswagen Aktiengesellschaft, 38436 Wolfsburg (DE)
(72) Erfinder: Weisser, Hubert, Dr. Dipl.-Ing., D-38165 Lehre (DE)

(56) Entgegenhaltungen:
- EP-A- 0 390 640
- EP-A- 0 444 402
- DE-A- 3 801 368
- DE-C- 4 301 228
- US-A- 4 216 498

## Beschreibung

Die Erfindung betrifft ein Verfahren zur Ermittlung der Sichtweite, insbesondere für die Bewegung eines Kraftfahrzeuges, mittels Bildverarbeitung.

Der größte Anteil der Informationen, die zum Führen eines Kraftfahrzeuges notwendig sind, werden visuell aufgenommen. Die Bedeutung der Fahrersicht wird besonders durch die Folgen deutlich, wenn das visuelle System für den Fahrer quasi ausfällt, dieses ist beispielsweise bei dichtem Nebel oder Dunkelheit der Fall. Bei der Abschätzung der momentanen Sichtweite durch den Fahrer treten oft große Fehler auf, die wachsen, wenn die Leitpfosten am Straßenrand als Referenzmaß fehlen. Aber auch mit dieser Referenz können sich starke Fehleinschätzungen ergeben, da der Verschmutzungsgrad der Leitpfosten stark schwanken kann. Aus diesem Grund ergibt sich die Aufgabe, eine Möglichkeit zur fahrzeugautonomen Sichtweitendetektion zu schaffen. Diese Unterstützung ist aber nicht nur für einen menschlichen Fahrer wichtig, sondern auch für vollautomatische Fahrzeugführungssysteme.

Aus dem Stand der Technik sind verschiedene Systeme zur Sichtweitendetektion bekannt. So beschreibt die Deutsche Patentschrift DE 37 35 267 C2 eine Vorrichtung zur Sichtweitenmessung mit einem Lichtemitter, vorzugsweise einer Laserdiode, sowie einem Lichtsensor, die innerhalb des Kraftfahrzeuges an einem Rückspiegel angeordnet sind. Die Laserdiode erzeugt zeitlich extrem kurze Lichtblitze, deren Lichtstrahlen in Fahrtrichtung auf einen Bereich der Windschutzscheibe gerichtet sind. Je nach dem Verschmutzungsgrad der Windschutzscheibe wird ein mehr oder weniger großer Anteil des emittierten Licht an der Windschutzscheibe rückgestreut. Darüber hinaus wird auch von dem die Windschutzscheibe durchsetzenden Lichtes ein mehr oder weniger große Anteil rückgestreut, wenn das Kraftfahrzeug durch ein Nebelgebiet fährt bzw. sich einer Nebelwand annähert oder wenn die Sichtverhältnisse durch andere Schwebestoffe in der Atmosphäre, beispielsweise durch Rauch eingeschränkt sind. Die rückgestreuten Lichtstrahlen fallen teilweise auf den Lichtsensor, der ein Signal abgibt, welches den Pegel der jeweils aufgefangenen Lichtintensität wiedergibt. Dabei ist die Sichtweite um so schlechter, je größer die Intensität der zurückgestreuten Lichtstrahlen ist. Die beschriebene Vorrichtung ermittelt die Sichtweite nur indirekt in Abhängigkeit von Transmissionen in der Atmosphäre bzw. vom Verschmutzungsgrad der Windschutzscheibe, wobei nur die rückgestreuten Strahlen, die auf den Lichtsensor fallen, aufgewertet werden können.

Ein anderes, auf der Auswertung von ausgesendeten Lichtstrahlen basierendes Verfahren zur Ermittlung der Sichtweite ist aus der Deutschen Patentschrift DE 38 10 840 C1 bekannt. Das beschriebene System weist eine Einrichtung auf, die unter Verwendung eines optischen Pulsradars oder Dauerstrich-Radars und einer Entferungsmessung nach dem Laufzeitmeßverfahren die physikalische Sichtweite aus Faktoren, die sich aus Transmissionen der Atmosphäre, einem Signal eines Helligkeitssensors und einem Scheinwerfersignal die physikalische Sichtweite ermittelt. Auch dieses Verfahren basiert hauptsächlich auf der Messung des Rückstreuanteils aufgrund von in der Atmosphäre befindlicher Partikel, wobei für den Fall der Dunkelheit in die Sichtweitenberechnung die Einflußgröße Helligkeit über das Scheinwerfersignal und den Helligkeitssensor einfließt. Allerdings leuchten die Scheinwerfer, insbesondere bei Abblendlicht, den Straßenraum nicht vollständig aus, so daß die Sichtweite im Fall für nicht selbstleuchtende Sehziele nur innerhalb des Scheinwerferkegels liegen kann.

Die Aufgabe der Erfindung besteht demgemäß darin, ein Verfahren, das mittels Bildverarbeitung eine genaue dem menschlichen Sehen nahekommende Sichtweitenermittlung durchführt, zu schaffen.

Die Aufgabe wird durch die Merkmale des Patentanspruchs 1 gelöst. Vorteilhafte Weiterbildungen sind in den abhängigen Ansprüchen dargestellt.

Erfindungsgemäß werden die von mindestens einer optoelektronischen Aufnahmeeinrichtung aufgenommenen Originalbilder in Bildmerkmale transformiert, die Orte von definierten Helligkeitsänderungen in den aufgenommenen Originalbildern kennzeichnen. Über eine Entfernungsbestimmung der Bildmerkmale relativ zu der optoelektronischen Aufnahmeeinrichtung und einer anschließenden Filterung der Entfernungswerte wird die aktuelle Sichtweite ermittelt.

Von Vorteil ist dabei, daß keine Objekterkennung durchgeführt werden muß, sondern auch mit Objektkomponenten gearbeitet werden kann. Nach einer bevorzugten Ausführungsform der Erfindung stellen die Bildmerkmale Konturen von Objekten oder Objektausschnitten dar, die wiederum durch Geraden oder Geradenstücke angenähert werden können. Aus Gründen der zu verarbeitenden Datenmenge können die Bildmerkmale markante Punkte dieser Geraden, wie die Endpunkte oder die Schnittpunkte zweier Geraden, darstellen.

Gemäß einer Ausgestaltung der Erfindung wird zur Ermittlung der Positionen der Bildmerkmale und damit auch ihrer Entfernung zu der optoelektronischen Aufnahmeeinrichtung ein Bewegungsstereo-Verfahren verwendet, wobei ein Vergleich der Position der Bildmerkmale in zwei nacheinander aufgenommenen Originalbildern erfolgt und aus der Differenz der Positionen jedes Bildmerkmals in den Originalbildern ein Verschiebungsvektor berechnet wird, aus dem unter Einbeziehung der Bewegung der optoelektronischen Aufnahmeeinrichtung die Position des dem Bildmerkmal zuordnenbaren Objektes bzw. Objektausschnittes ermittelt wird.

Die Bewegung der optoelektronischen Aufnahmeeinrichtung wird aus Parametern der Fahrzeugbewegung, wie zum Beispiel der Fahrgeschwindigkeit, der Wank-, Quer- und/oder der Nickbewegung des Kraftfahrzeuges, berechnet.

Gemäß einer vorteilhaften Weiterbildung der Erfindung liefert die optoelektronische Aufnahmeeinrichtung kontinuierlich Originalbilder mit einer Frequenz im Bereich von 25 bis 30 Hz, die auf Bildmerkmale untersucht werden. Die von der optoelektronischen Aufnahmeeinrichtung erzeugten Originalbilder sind gemäß einer weiteren Ausbildung Grauwertbilder.

Die Erkennung bzw. Detektion der markanten Punkte im Originalbild kann vorteilhafterweise über bekannte Interest-Operatoren, wie den Moravec- oder den Dreschler-Operator, erfolgen, wobei in die Berechnung des Schwellwertes Faktoren der physiologischen Sehleistung des Fahrers einfließen können.

Die aktuelle Sichtweite wird aus den Entfernungen der Bildmerkmale vorteilhaft über eine Filterung mit einem Schwellwert ermittelt z. B. Maximumfilterung. Der Vorteil des erfindungsgemäßen, gegenüber herkömmlichen Verfahren besteht insbesondere darin, daß ohne aktive Sender zusätzlich zu Transmission der Atmosphäre der echte Sehobjektkontrast in die Ermittlung der Sichtweite einfließt.

Nachfolgend wird die Erfindung anhand von Ausführungsbeispielen näher beschreiben. Die zugehörigen Zeichnungen zeigen:

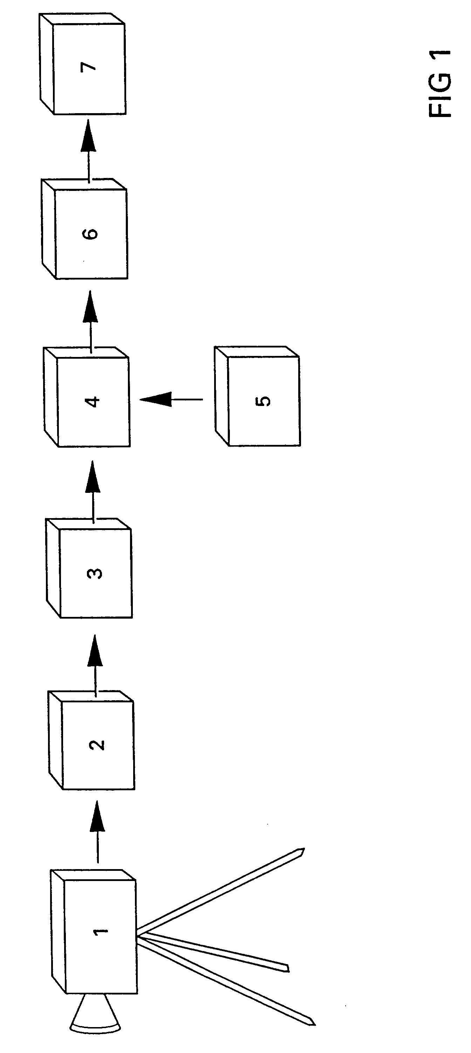

- Figur 1:: eine schematische Darstellung der Verfahrensschritte,
- Figur 2:: ein Bildausschnitt mit markanten Punkten,
- Figur 3:: ein Bildausschnitt mit eingetragenen Verschiebungsvektoren,
- Figur 4:: eine Darstellung der Suchraumeinschränkung und
- Figur 5:: zwei Entfernungshistogramme.

Die Grundlage des erfindungsgemäßen Verfahrens sind Überlegungen, wie Menschen visuelle Informationen aufnehmen. Die mit den Augen aufgenommenen Bilder werden in grundlegende Bildmerkmale transformiert, die lediglich Orte von Identitätsänderungen des Originalbildes enthalten. Zur Aufnahme der Originalbilder wird eine CCD-Kamera 1 verwendet, die kontinuierlich Grauwertbilder mit einer Frequenz von 25 Hz liefert. Die in einem nachfolgenden Verfahrensschritt 2 auf markante Punkte P untersucht und deren Position gespeichert wird. Im anschließenden Verfahrensschritt 3 erfolgt die Zuordnung der markanten Punkte P eines ersten aufgenommenen Originalbildes in einem nachfolgenden zweiten Originalbild über ein Bewegungsstereo-Verfahren. Durch die so entstandenen Verschiebungsvektoren der markanten Punkte P kann mit dem Wissen der Fahrzeugbewegung 5 im Verfahrenschritt 4 die Position der markanten Punkte relativ zur CCD-Kamera 1 berechnet werden. Im letzten Schritt 6 werden die Entfernungen der markanten Punkte hinsichtlich einer maximalen Entfernung gefiltert, was dann ein Maß für die Sichtweite 7 ist.

Nachfolgend werden die einzelnen Verfahrenschritte näher erläutert. Für die Detektierung der markanten Punkte werden lokale Gebiete bzw. Punkte, die eine steile Autokorrelationsfunktion besitzen, benötigt, um diese im nächsten Originalbild wiederfinden zu können. Der Moravec-Operator bzw. der modifizierte Moravec-Operator bewertet lokalgerichtete Grauwert-Varianzen.

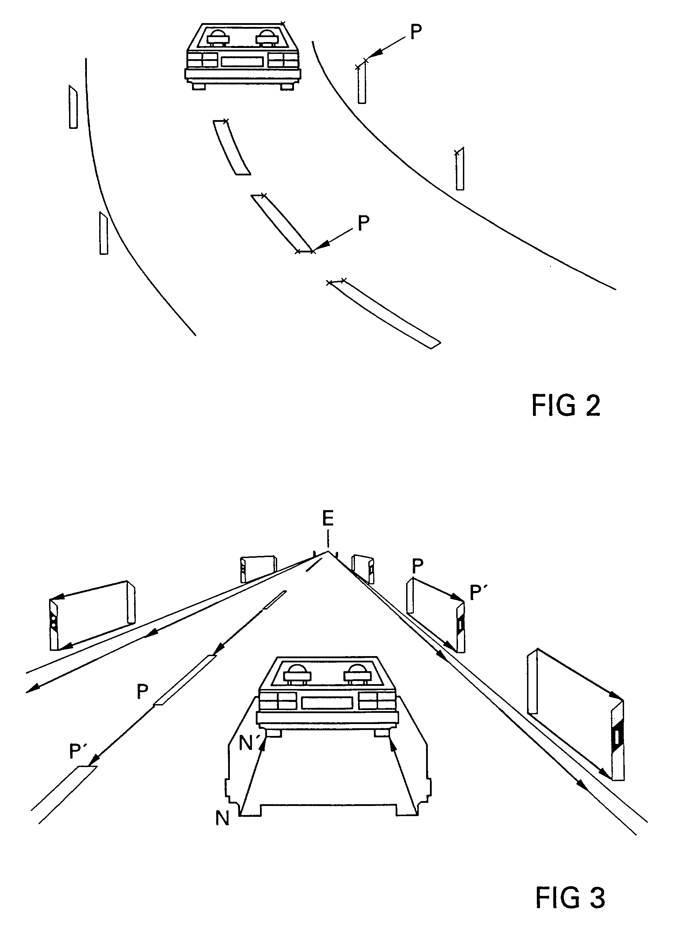

Der Ablauf ist folgendermaßen: innerhalb einer gewählten Operatorgröße werden Quadrate der Grauwertdifferenzen benachbarter Pixel in verschiedenen Richtungen addiert. Der erhaltene Operator wird als das Minimum der Richtungsvarianten definiert und wird dem betrachteten Pixel zugeordnet. Als markante Punkte werden nun alle lokalen Maxima des Operatorwertes detektiert, die einen ausgewählten Schwellwert überschreiten. Figur 2 zeigt ein Originalbild einer realen Verkehrsszene mit detektierten markanten Punkten P.

Ein weiterer, einsetzbarer Interest-Operator ist der sogenannte Dreschler-Operator. Der Gedanke des Dreschler-Operators liegt darin, nicht mit Grauwertdifferenzen, sondern direkt mit lokalen Krümmungen die differentialgeometrischen Eigenschaften der Bildfunktion zur Erfassen. Basierend auf den 2. Ableitungen der Bildfunktion werden die Haupt- bzw. Gaußschen Krümmungen berechnet und über eine Interpretation der lokalen Krümmungsextrema markante Punkte bestimmt. Dabei wird die Merkmalsstruktur genau beschrieben.

Über den Verfahrensschritt 3, Zuordnung der markanten Punkte P aus zwei nacheinander aufgenommenen Originalbildern wird ein Verschiebungsvektorfeld abgeleitet, mit dem dann die eigentliche Entfernungsbestimmung 4 durchgeführt werden kann. Dafür ist in dem zweiten Bild der korrespondierende Punkt P' bezüglich eines detektierten markanten Punktes P aus dem ersten Originalbild zu bestimmen bzw. umgekehrt. Bei dem Verfahren wird von der Erkenntnis ausgegangen, wenn bei einer Bewegung, deren Bewegungsrichtung identisch mit der Blickrichtung ist, sich alle ortsfesten Bildpunkte P; P' radial von einem gedachten Punkt, dem Expansionszentrum E, nach außen zum Bildrand bewegen, wobei die relative Geschwindigkeit, mit der sich ein Punkt bewegt, umgekehrt proportional zu seiner pysikalischen Entfernung von der Aufnahmeeinrichtung ist. Entsprechend der zugehörigen Objektposition sind die Verschiebungsvektoren der markanten Punkte P unterschiedlich lang. Bildmerkmale von nicht ortsfesten Objekten, zum Beispiel von anderen Fahrzeugen, erzeugen Verschiebungsvektoren, die in ihrer Richtung nicht radial von dem Expansionszentrum nach außen zeigen, wodurch zwischen ortsfesten und nicht ortsfesten Punkten unterschieden werden kann. Eine prinzipielle Darstellung der Bewegung der ortsfesten Punkte P und der nicht ortsfesten Punkte N bezüglich des Expansionszentrums E ist in Figur 3 dargestellt.

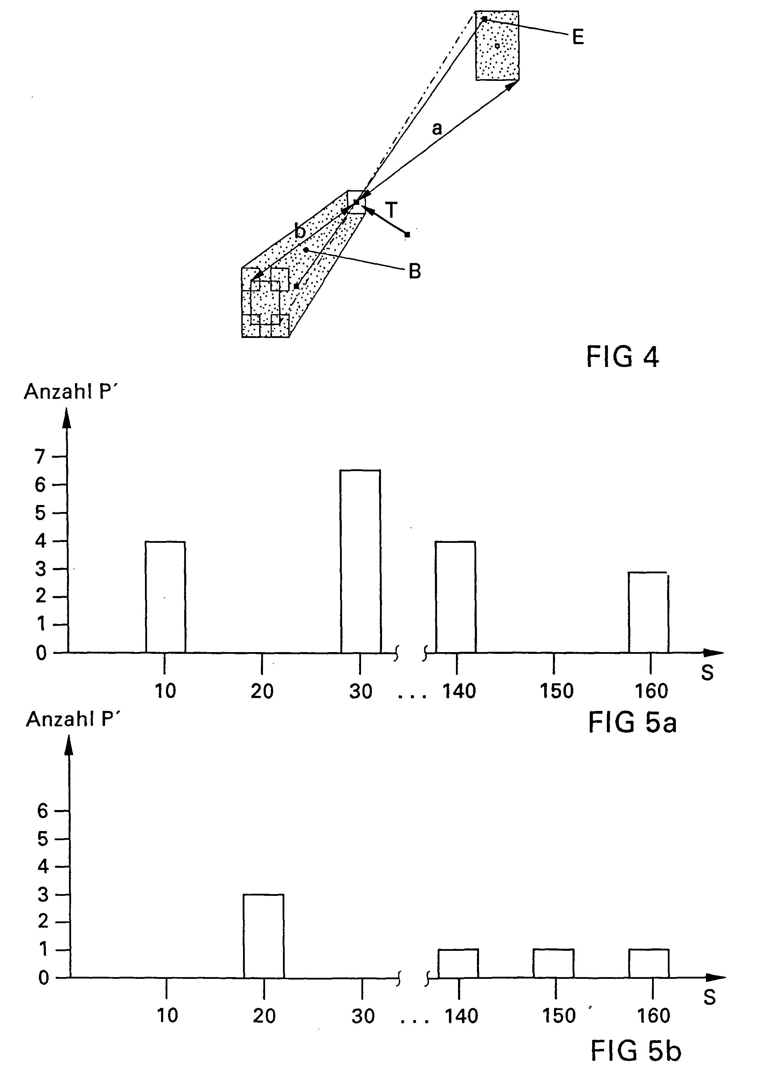

Bei einer Entfernungsbestimmung der ortsfesten markanten Punkte P muß einerseits die radiale Punktbewegung bezüglich des Expansionszentrums E andererseits auch die Eigenbewegungen des Kraftfahrzeuges berücksichtigt werden. Letzteres ist notwendig, da sich die mit dem Fahrzeug festverbundene CCD-Kamera nicht ideal in einer Richtung, der Fahrtrichtung bewegt, sondern bedingt durch Nick- und Wankbewegungen des Fahrzeuges die CCD-Kamera zusätzlich störende Eigenbewegungen ausführt. Aus diesem Grund wird sowohl um das Expansionszentrum E wie auch um den markanten Punkt P selbst ein Unsicherheitsbereich eingeführt. Dabei ist zu berücksichtigen, daß die Position des markanten Punktes P aus dem ersten Originalbild auf die im zweiten Originalbild veränderten Verhältnisse transformiert werden muß, was durch einen zum Originalpunkt P zugehörigen Translationsvektor T bewirkt wird. Es wird ein Suchraum aus der Vorhersage der Bewegung von ortsfesten Punkten sowie der Unsicherheitsbereiche aufgespannt. Die Suchraumlänge b wird adaptiv durch den Abstand a des markanten Punktes P zum Expansionszentrum E gesteuert, da nah am Expansionszentrum liegende Punkte kleinere Verschiebungsvektoren als weiter davon entfernte Punkte besitzen (Fig. 4). Ein solches Vorgehen bezweckt einerseits die Reduktion der Anzahl der markanten Punkte für die Korrespondenz als auch andererseits eine spezielle Filterung, welche ortsfeste Punkte extrahiert. Letzteres ist deshalb notwendig, da nicht ortsfeste Punkte für die Positionsauswertung mittels eines Bewegungsstereo-Verfahrens nicht herangezogen werden können, weil ihre Positionsänderung zwischen den Aufnahmen im allgemeinen unbekannt ist.

Die markanten Punkte P' im zweiten Originalbild, die innerhalb des beschriebenen Suchraums liegen sind potentielle Kandidaten für den korrespondierten Punkt P aus dem ersten Originalbild. Die Entscheidungsfindung, welcher markante Punkt aus dem zweiten Originalbild zum markanten Punkt aus dem ersten Originalbild korrespondiert, kann mit Hilfe von Algorithmen der FUZZY-Logic durchgeführt werden. Dabei einsetzbare Regeln sind:
1. die Position des Punktes P; P' bezüglich des Suchraums,
2. die Anzahl der markanten Punkte,
3. die Gaußsche Krümmung im Maximum,
4. die Strukturentwicklung beim Dreschler-Operator,
5. Anzahl der zugehörigen Minima beim Dreschler--Operator,
6. Mittelwert der Grauwert-Umgebung und
7. Überschreitung einer Mindestschwelle.

Bei der 4. Ähnlichkeitsregel handelt es sich um ein spezielles Verhalten des Dreschler-Operators. Sehr kleine, im Extremfall punktförmliche Bildstrukturen bestehen aus einem Maximum der Gaußschen Krümmung umgeben von mehreren Minima. Werden diese Strukturen größer, was der Fall ist, wenn man sich nähert, so werden diese Strukturen ausgeprägter, woraus resultiert, daß die Anzahl der das Maximum umgebundenen Minima sinkt, im Extremfall auf ein Minimum bei einer Ecke. Hieraus wird geschlossen, daß sich die Kamera auf die Punkte zu bewegt.

Anhand der Ergebnisse oben genannten Regeln wird für jeden im Suchraum B liegenden markanten Punkt P' im zweiten Originalbild ein Bewertungsmaß bezüglich seiner Ähnlichkeit zu dem markanten Punkt P des ersten Originalbildes berechnet. Das Ergebnis sind Verschiebungsfaktoren von ortsfesten Punkten, die sich aus der Änderung der Kameraposition ergeben.

Über den Verschiebungsvektor eines ortsfesten markanten Punktes P, der durch das Punktpaar P und P' aufgespannt wird, wird unter Berücksichtigung der Fahrzeugbewegung mit Gieren, Nicken und Wanken die Entfernung eines dem markanten Punkt P zugehörigen Objektes oder Objektkomponente berechnet und in ein Entfernungshistogramm eingetragen. Da sich das Fahrzeug bzw. die CCD-Kamera während der Aufnahme der Bilder dem markanten Punkt P genähert hat, ist dabei die Entfernungsberechnung auf dem markanten Punkt P' im zweiten Originalbild zu beziehen.

Die Sichtweite wird im nächsten Verfahrensschnitt aus der Entfernungsverteilung der zu den erkannten markanten Punkten zugehörigen Objekten, deren photometrischer Kontrast somit größer als ein definierter Schwellwert, z. B. der physiologische Schwellenkontrast des menschlichen Auges, ist, bestimmt. Da für die Sichtweite aufgrund ihres Bereichsverständnisses die Größenordnung wesentlich wichtiger ist, als ein exakter Wert, wird die Sichtweite nach dem Ausführungsbeispiel in Intervallen s = 10 m ermittelt. Der Ablauf der Auswertung geschieht deshalb mittels einer Intervallorganisation, die durch ihre Struktur eine lokale Tiefpaßcharakteristik besitzt, wodurch Ergebnisschwankungen reduziert werden. So wird für jedes Merkmal der Wert des entsprechenden Entfernungsintervalls inkrementiert und anschließend eine Maximumfilterung derart durchgeführt, daß je nachdem welche Entfernung größer ist, entweder das höchste Entfernungsintervall mit einer Punkthäufigkeit von größer 1 oder das höchste Entfernungsintervall in einer Punkthäufigkeit von mindestens 1 und besetzten beiden unteren Nachbarfeldern ausgewählt wird, um zufällige Fehler auszuschließen. Zwei entsprechende Entfernungshistogramme für eine Sichtweite von 160 m ist in Figur 5 dargestellt.

### BEZUGSZEICHEN

- 1: elektronische Bildaufnahmeeinrichtung
- 2: Detektion
- 3: Zuordnung markanter Punkte
- 4: Enternungsbestimmung
- 5: Fahrzeugbewegung

- P: markante Punkte eines ersten Originalbildes
- P': markante Punkte eines zweiten Originalbildes
- E: Expansionszentrum
- N: nicht ortsfeste Punkte
- T: Translationsvektor
- b: Suchraumlänge
- a: Abstand vom Expansionszentrum

## Patentansprüche

1. Verfahren zur Ermittlung der Sichtweite, insbesondere für die Bewegung eines Kraftfahrzeuges, mittels Bildverarbeitung mit folgenden Merkmalen:
- von mindestens einer optoelektronischen Aufnahmeeinrichtung in Richtung der zu ermittelnden Sichtweite aufgenommene Originalbilder werden in Bildmerkmale transformiert, die Orte von definierten Helligkeitständerungen in den aufgenommenen Originalbildern enthalten,
- Bestimmung der Entfernung der Bildmerkmale relativ zu der elektronischen Aufnahmeeinrichtung und
- Ermittlung der aktuellen Sichtweite aus der Entfernung der Bildmerkmale.

2. Verfahren nach Anspruch 1, **dadurch gekennzeichnet, daß** die Bildmerkmale Konturen von Objekten im Originalbild sind.

3. Verfahren nach Anspruch 1 oder 2, **dadurch gekennzeichnet, daß** die Bildmerkmale Geraden und/oder durch Geradenstücke angenäherte Konturen sind.

4. Verfahren nach Anspruch 3, **dadurch gekennzeichnet, daß** die Geraden und/oder die durch Geradenstücke angenäherten Konturen durch markante Punkte, insbesondere ihre Endpunkte, beschrieben werden.

5. Verfahren nach Anspruch 4, **dadurch gekennzeichnet, daß** die Position der den markanten Punkten zu ordbaren Objekte oder Objektausschnitte und damit ihre Entfernung zur der optoelektronischen Aufnahmeeinrichtung durch Vergleich der Position der markanten Punkte in zwei aufgenommenen Originalbildern erfolgt und aus der Differenz der Positionen jedes markanten Punktes in den Originalbildern ein Verschiebungsvektor berechnet wird, aus dem die Position des den markanten Punkten zu ordbaren Objekten oder Objektausschnitten ermittelt wird.

6. Verfahren nach Anspruch 5, **dadurch gekennzeichnet, daß** die Originalbilder zeitgleich mit verschiedenen optoelektronischen Aufnahmeeinrichtungen aufgenommen werden.

7. Verfahren nach Anspruch 5, **dadurch gekennzeichnet, daß** die Originalbilder zeitlich nacheinander unter Einbeziehung der Bewegung der optoelektronischen Aufnahmeeinrichtung aufgenommen werden.

8. Verfahren nach Anspruch 7, **dadurch gekennzeichnet, daß** die Bewegung der optoelektronischen Aufnahmeeinrichtung aus der Fahrgeschwindigkeit, der Wank-, Quer- und/oder der Nickbewegung des Kraftfahrzeuges berechnet wird.

9. Verfahren nach einem der Ansprüche 1 bis 8, **dadurch gekennzeichnet, daß** die elektronische Aufnahmeeinrichtung kontinuierlich Originalbilder mit einer Frequenz im Bereich von 25 bis 30 Hz liefert, die auf Bildmerkmale untersucht werden.

10. Verfahren nach einem der Ansprüche 1 bis 9, **dadurch gekennzeichnet, daß** die optoelektronische Aufnahmeeinrichtung Grauwertbilder erzeugt.

11. Verfahren nach einem der Ansprüche 4 bis 10, **dadurch gekennzeichnet, daß** die Transformierung der markanten Punkte aus den Originalbildern über einen oder mehrere Moravec-Operatoren erfolgt.

12. Verfahren nach einem der Ansprüche 4 bis 10, **dadurch gekennzeichnet, daß** die Transformierung der markanten Punkte aus den Originalbildern über einen oder mehrere Dreschler-Operatoren erfolgt.

13. Verfahren nach einem der Ansprüche 1 bis 12, **dadurch gekennzeichnet, daß** im Originalbild ortsfeste Bildmerkmale zur Sichtweitenermittlung verwendet werden.

14. Verfahren nach einem der Ansprüche 1 bis 13, **dadurch gekennzeichnet, daß** die Ermittlung der Sichtweite aus der Entfernung der Bildmerkmale über eine Maximumfilterung mittels eines Schwellwertes erfolgt.

15. Verfahren nach Anspruch 11 oder 12, **dadurch gekennzeichnet, daß** in die Transformierung Faktoren der physiologischen Sehleistung eines Fahrers einfließen.

16. Verfahren nach einem der Ansprüche 1 bis 15, **dadurch gekennzeichnet, daß** zum Auffinden eines Bildmerkmals eines ersten Originalbildes in einem zweiten Originalbild Algorithmen der FUZZY-Logic verwendet werden.

17. Verfahren nach einem der Ansprüche 1 bis 16, **dadurch gekennzeichnet, daß** der Meßbereich eines auf Bildverarbeitung basierenden Sensorsystems ermittelt wird.

## Claims

1. Method of determining the visibility range, in particular for the movement of a motor vehicle, by means of image processing comprising the following features:
- original images, which have been recorded by at least one optoelectronic recording device in the direction of the visibility range which is to be determined, are transformed into image attributes which contain areas of defined changes in brightness in the recorded original images,
- determination of the distance of the image attributes with respect to the electronic recording device and
- determination of the current visibility range from the distance between the image attributes.

2. Method according to claim 1, **characterised in that** the image attributes are contours of objects in the original image.

3. Method according to claim 1 or 2, **characterised in that** the image attributes are straight lines and/or contours brought closer by sections of straight lines.

4. Method according to claim 3, **characterised in that** the straight lines and/or the contours which are brought closer by sections of straight lines are described by defined points, in particular their end points.

5. Method according to claim 4, **characterised in that** the position of the objects or object sections, which can be allocated to the defined points, and thus their distance with respect to the optoelectronic recording device is established by comparison of the position of the defined points in two recorded original images and from the difference in the positions of each defined point in the original image a displacement vector is calculated which is used for the purpose of determining the position of the objects or object sections which can be allocated to the defined points.

6. Method according to claim 5, **characterised in that** the original images are recorded simultaneously by means of different optoelectronic recording devices.

7. Method according to claim 5, **characterised in that** the original images are recorded successively with respect to time thus incorporating the movement of the optoelectronic recording device.

8. Method according to claim 7, **characterised in that** the movement of the optoelectronic recording device is calculated from the travel velocity, rolling motion, transverse movement and/or the pitching motion of the motor vehicle.

9. Method according to any one of the claims 1 to 8, **characterised in that** the electronic recording device continuously provides original images at a frequency in the range of 25 to 30 Hz, which original images are examined for image attributes.

10. Method according to any one of the claims 1 to 9, **characterised in that** the optoelectronic recording device generates gray level images.

11. Method according to any one of the claims 4 to 10, **characterised in that** the transformation of the defined points from the original images is performed by means of one or several Moravec-operators.

12. Method according to any one of the claims 4 to 10, **characterised in that** the transformation of the defined points from the original images is performed by means of one or several Dreschler-operators.

13. Method according to any one of the claims 1 to 12, **characterised in that** positionally fixed image attributes in the original image are used for the purpose of determining the visibility range.

14. Method according to any one of the claims 1 to 13, **characterised in that** the visibility range is determined from the distance between the image attributes by way of maximum filtering by means of a threshold value.

15. Method according to claim 11 or 12, **characterised in that** factors of the driver's physiological eyesight influence the transformation process.

16. Method according to any one of the claims 1 to 15, **characterised in that** FUZZY-logic algorithms are used for the purpose of detecting an image attribute of a first original image in a second original image.

17. Method according to any one of the claims 1 to 16, **characterised in that** the measurement range of an image processing-based sensor system is determined.

## Revendications

1. Procédé pour la détermination de la visibilité, notamment pour le déplacement d'un véhicule automobile, au moyen d'un traitement d'image, avec les caractéristiques suivantes :
- on transforme des images originales enregistrées par au moins un dispositif d'enregistrement optoélectronique dans la direction de la visibilité à déterminer en caractéristiques d'images qui contiennent des endroits de variations de luminosité définis dans les images originales enregistrées,
- on détermine la distance des caractéristiques d'images par rapport au dispositif d'enregistrement électronique, et
- on détermine la visibilité actuelle à partir de la distance des caractéristiques d'images.

2. Procédé selon la revendication 1, **caractérisé en ce que** les caractéristiques d'images sont des contours d'objets dans l'image originale.

3. Procédé selon la revendication 1 ou 2, **caractérisé en ce que** les caractéristiques d'images sont des contours approchés par des droites et/ou par des segments de droites.

4. Procédé selon la revendication 3, **caractérisé en ce que** les contours approchés par des droites et/ou des segments de droites sont décrits par des points marquants, notamment leurs extrémités.

5. Procédé selon la revendication 4, **caractérisé en ce que** la détermination de la position des objets ou parties d'objets pouvant être associés aux points marquants et ainsi de leur distance au dispositif d'enregistrement optoélectronique s'effectue en comparant la position des points marquants dans deux images originales enregistrées et on calcule à partir de la différence des positions de chaque point marquant dans les images originales un vecteur de déplacement à partir duquel on détermine la position des objets ou parties d'objets pouvant être associés aux points marquants.

6. Procédé selon la revendication 5, **caractérisé en ce qu'**on enregistre les images originales en même temps avec différents dispositifs d'enregistrement optoélectroniques.

7. Procédé selon la revendication 5, **caractérisé en ce qu'**on enregistre les images originales les unes après les autres en incluant le mouvement du dispositif d'enregistrement optoélectronique.

8. Procédé selon la revendication 7, **caractérisé en ce qu'**on calcule le mouvement du dispositif d'enregistrement optoélectronique à partir de la vitesse de déplacement, du mouvement de roulis, transversal et/ou de tangage du véhicule automobile.

9. Procédé selon l'une quelconque des revendications 1 à 8, **caractérisé en ce que** le dispositif d'enregistrement optoélectronique fournit en continu avec une fréquence comprise entre 25 et 30 Hz des images originales qui sont examinées pour trouver des caractéristiques d'images.

10. Procédé selon l'une quelconque des revendications 1 à 9, **caractérisé en ce que** le dispositif d'enregistrement optoélectronique produit des images en valeurs de gris.

11. Procédé selon l'une quelconque des revendications 4 à 10, **caractérisé en ce que** la transformation des points marquants des images originales s'effectue par l'intermédiaire d'un ou de plusieurs opérateurs de Moravec.

12. Procédé selon l'une quelconque des revendications 4 à 10, **caractérisé en ce que** la transformation des points marquants des images originales s'effectue par l'intermédiaire d'un ou de plusieurs opérateurs de Dreschler.

13. Procédé selon l'une quelconque des revendications 1 à 12, **caractérisé en ce qu'**on utilise des caractéristiques d'images immobiles dans l'image originale pour la détermination de visibilité.

14. Procédé selon l'une quelconque des revendications 1 à 13, **caractérisé en ce que** la détermination de la visibilité s'effectue à partir de la distance des caractéristiques d'images par l'intermédiaire d'un filtrage à maximum au moyen d'une valeur de seuil.

15. Procédé selon la revendication 11 ou 12, **caractérisé en ce que** des facteurs concernant l'acuité visuelle d'un conducteur influent sur la transformation.

16. Procédé selon l'une quelconque des revendications 1 à 15, **caractérisé en ce qu'**on utilise des algorithmes de la logique floue pour trouver une caractéristique d'image d'une première image originale dans une deuxième image originale.

17. Procédé selon l'une quelconque des revendications 1 à 16, **caractérisé en ce qu'**on détermine le domaine de mesure d'un système de capteur basé sur le traitement d'image.
